# EUROPEAN PATENT APPLICATION

(11) **EP 4 489 456 A1**
(43) Date of publication of application: **08.01.2025**
(21) Application number: 23759751.3
(22) Date of filing: 13.02.2023
(51) Int. Cl.: H04W 8/24, H04W 72/0453, H04W 72/21

(54) **TERMINAL, BASE STATION, AND COMMUNICATION METHOD**

(30) Priority: 28.02.2022 JP 2022030487
(71) Applicant: NTT DOCOMO, INC., Tokyo 100-6150 (JP)
(72) Inventor: YOSHIOKA, Shohei, Tokyo 100-6150 (JP); TAKAHASHI, Yuki, Tokyo 100-6150 (JP); KUMAGAI, Shinya, Tokyo 100-6150 (JP); NAGATA, Satoshi, Tokyo 100-6150 (JP); PI, Qiping, Beijing, 100190 (CN)
(74) Representative: Hoffmann Eitle
(86) International application number: PCT/JP2023/004735
(87) International publication number: WO 2023/162748

(57) **Abstract**

A terminal including: a transmission unit configured to transmit terminal capability information, in uplink, that includes a carrier type supporting transmission in a group of uplink control signals; and a control unit configured to assume that carrier switching of the uplink control signals is configured for the carrier type included in the terminal capability information.

## Description

### Technical Field

The present invention relates to a terminal, a base station, and a communication method in a radio communication system.

### Background Art

In NR (New Radio) (also referred to as "5G") which is a successor system of LTE (Long Term Evolution), techniques for satisfying requirements such as a large-capacity system, a high-speed data transmission rate, low delay, simultaneous connection of a large number of terminals, low cost, and power saving have been studied (for example, Non-patent document 1).

In NR, in order to improve communication quality, studies have been made to enhance a function of feedback from a terminal to a base station. Information to be fed back from the terminal to the base station is transmitted in a resource of a physical uplink control channel (PUCCH). In NR Release 17, it is agreed to support PUCCH carrier switching (also referred to as PUCCH cell switching).

### Prior Art Document

### Non-Patent Document

Non-Patent Document 1: 3GPP TS 38.300 V16. 6.0 (2021-06)

### SUMMARY OF THE INVENTION

### Problems to be Solved by the Invention

Since there is no rule for a PUCCH transmission carrier in consideration of a carrier type reported as a terminal feature indicating PUCCH grouping supported in the related art and a supported carrier type that can be configured in PUCCH transmission, there is a problem in that PUCCH carrier switching cannot be configured for an appropriate carrier type.

The present invention has been made in view of the above, and it is therefore an object of the present invention to configure PUCCH carrier switching for an appropriate carrier type.

### Means for Solving the Problems

According to a disclosed technique, there is provided a terminal including:
a transmission unit configured to transmit terminal capability information, in uplink, that includes a carrier type supporting transmission in a group of uplink control signals; and
a control unit configured to assume that carrier switching of the uplink control signals is configured for the carrier type included in the terminal capability information.

### Effects of the Invention

According to the disclosed technology, a technology is provided that enables PUCCH carrier switching to be configured for an appropriate carrier type.

### Brief Description of the Drawings

[Fig. 1] FIG. 1 is a first diagram for explaining a radio communication system according to an embodiment of the present invention;
[Fig. 2] FIG. 2 is a second diagram for explaining the radio communication system according to the embodiment of the present invention;
[Fig. 3] FIG. 3 is a diagram showing an example of PUCCH carrier switching;
[Fig. 4] FIG. 4 is a first diagram showing an example of conventional terminal features;
[Fig. 5] FIG. 5 is a second diagram showing an example of conventional terminal features;
[Fig. 6] FIG. 6 is a diagram showing an example of a functional configuration of a base station 10 according to an embodiment of the present invention;
[Fig. 7] FIG. 7 is a diagram showing an example of a functional configuration of a terminal 20 according to an embodiment of the present invention.

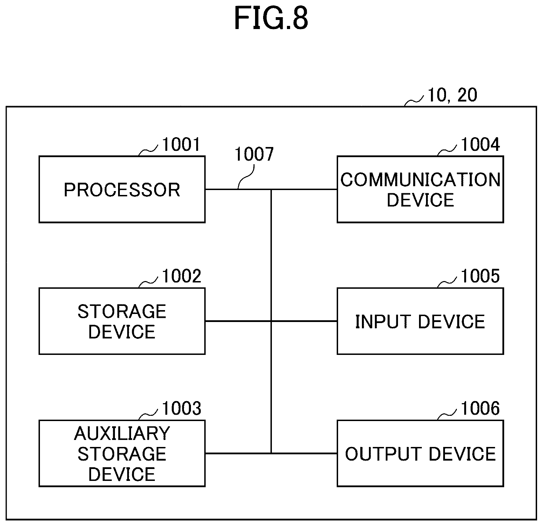

[Fig. 8] FIG. 8 is a diagram showing an example of a hardware configuration of the base station 10 or the terminal 20 according to an embodiment of the present invention;
[Fig. 9] FIG. 9 is a diagram showing an example of a configuration of a vehicle 2001 according to an embodiment of the present invention.

### Detailed Description of the Invention

Hereinafter, an embodiment of the present invention will be described with reference to the drawings. The embodiment described below is an example, and the embodiment to which the present invention is applied is not limited to the following embodiment.

In the operation of the radio communication system according to an embodiment of the present invention, existing techniques may be used as appropriate. The existing technology is, for example, existing NR or LTE, but is not limited to existing NR or LTE. In addition, the term "LTE" used in the present specification has a broad meaning including LTE-Advanced and schemes (example: NR) subsequent to LTE-Advanced unless otherwise specified.

In addition, in the embodiments of the present invention described below, terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) used in the existing LTE are used. This is for convenience of description, and signals, functions, and the like similar to these may be referred to by other names. The above-mentioned terms in NR correspond to NR-SS, NR-PSS, NR-SSS, NR-PBCH, NR-PRACH and the like. However, even a signal used for NR is not necessarily specified as "NR -".

In the embodiments of the present invention, the duplex scheme may be a time division duplex (TDD) scheme, a frequency division duplex (FDD) scheme, or another scheme (for example, flexible duplex).

In the embodiments of the present invention, a radio parameter or the like being "configured" may mean that a predetermined value is pre-configured or that a radio parameter notified from a base station or a terminal is configured.

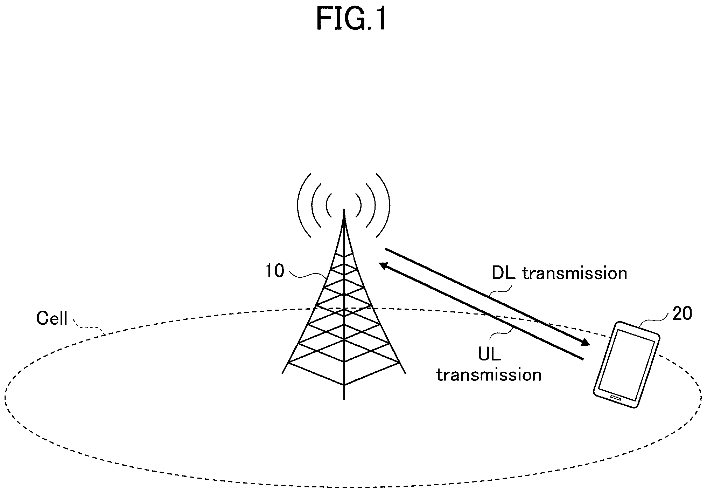

FIG. 1 is a first diagram for explaining a radio communication system according to an embodiment of the present invention. As shown in FIG. 1, the radio communication system according to the embodiment of the present invention includes a base station 10 and a terminal 20. Although one base station 10 and one terminal 20 are illustrated in FIG. 1, this is merely an example, and a plurality of base stations 10 and a plurality of terminals 20 may be provided.

The base station 10 is a communication apparatus that provides one or more cells and performs radio communication with the terminal 20. The physical resource of the radio signal is defined in a time domain and a frequency domain, and the time domain may be defined by the number of OFDM symbols, and the frequency domain may be defined by the number of subcarriers or the number of resource blocks. In addition, a transmission time interval (TTI) in the time domain may be a slot, or a TTI may be a subframe.

The base station 10 can perform carrier aggregation in which a plurality of cells (a plurality of component carriers (CCs)) are aggregated to communicate with the terminal 20. In the carrier aggregation, one PCell (primary cell) and one or more SCells (secondary cells) are used.

The base station 10 transmits a synchronization signal, system information, and the like to the terminal 20. The synchronization signal is, for example, the NR-PSS and the NR-SSS. The system information is transmitted by, for example, the NR-PBCH or the PDSCH, and is also referred to as broadcast information. As illustrated in FIG. 1, the base station 10 transmits a control signal or data to the terminal 20 in downlink (DL), and receives a control signal or data from the terminal 20 in uplink (UL). Note that, although what is transmitted in a control channel such as the PUCCH and the PDCCH is referred to as a control signal and what is transmitted in a shared channel such as the PUSCH and the PDSCH is referred to as data here, such a way of referring to it is merely an example.

The terminal 20 is a communication apparatus having a radio communication function, such as a smartphone, a mobile phone, a tablet, a wearable terminal, and a machine-to-machine (M2M) communication module. As illustrated in FIG. 1, the terminal 20 receives a control signal or data from the base station 10 in DL and transmits a control signal or data to the base station 10 in UL, thereby using various communication services provided by the radio communication system. The terminal 20 may be referred to as UE, and the base station 10 may be referred to as gNB.

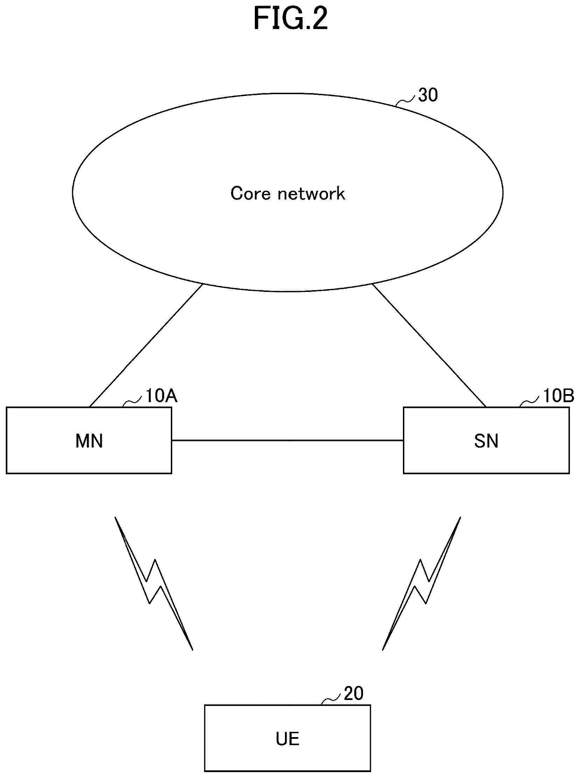

FIG. 2 is a second diagram for explaining a radio communication system according to an embodiment of the present invention. FIG. 2 shows a configuration example of a radio communication system in a case where dual connectivity (DC) is executed. As shown in FIG. 2, base stations 10A and 10B are provided as a master node (MN) and a secondary node (SN), respectively. The base stations 10A and 10B are connected to the core network 30. The terminal 20 can communicate with both the base stations 10A and 10B.

A cell group provided by the base station 10A serving as the MN is referred to as a master cell group (MCG), and a cell group provided by the base station 10B serving as the SN is referred to as a secondary cell group (SCG). Also, in dual connectivity, the MCG is formed with one PCell and zero or more SCells, and the SCG is formed with one PSCell (Primary SCG Cell) and zero or more SCells.

Note that the dual connectivity may be a communication method using two communication standards, and any communication standards may be combined. For example, the combination may be any of NR and 6G standard, and LTE and 6G standard. The dual connectivity may be a communication method using three or more communication standards, and may be referred to as another name different from the dual connectivity.

The processing operation in the present embodiment may be executed by the system configuration shown in FIG. 1, the system configuration shown in FIG. 2, or other system configurations.

In 3GPP standardization, it is being considered to support enhanced Internet of Things (IoT) and ultra-reliable and low latency communication (URLLC) in NR. For example, in NR, it is studied to enhance a function of feedback (HARQ-ACK) from a terminal to a base station in order to improve communication quality.

### (Regarding PUCCH Carrier Switching)

In NR, PUCCH carrier switching is under study as a method of reducing the latency of HARQ-ACK feedback in a time division duplex (TDD) scheme.

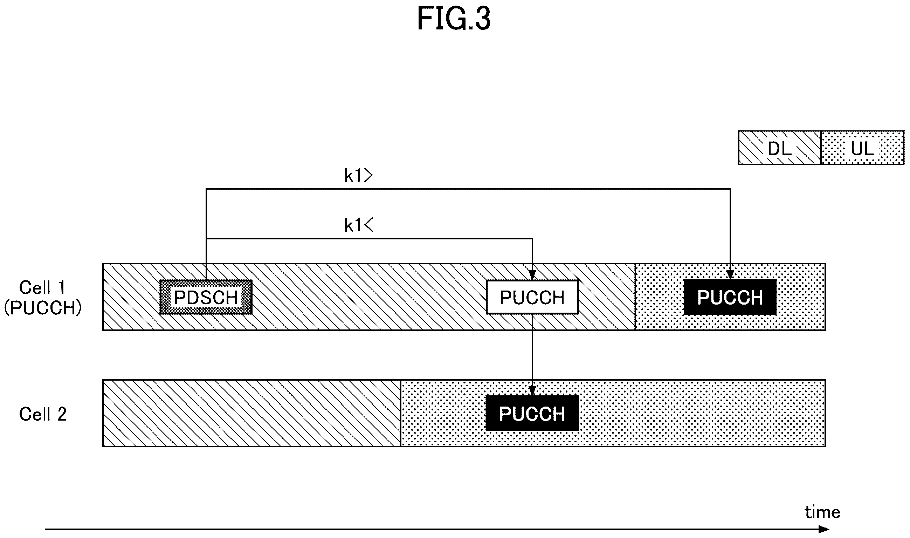

FIG. 3 is a diagram illustrating an example of PUCCH carrier switching. In the example of FIG. 3, the base station 10 and the terminal 20 communicate with each other via a cell 1 and a cell 2. For example, the cell 1 is a primary cell, and the cell 2 is a secondary cell. Further, FIG. 3 illustrates a downlink (DL) slot and an uplink (UL) slot in each cell.

In FIG. 3, the terminal 20 receives data (PDSCH: Physical Downlink Shared Channel) and attempts to transmit HARQ-ACK for the received data. However, since the slot of the cell 1 is a downlink slot, the terminal 20 suspends transmission of the HARQ-ACK until a transmission timing of a PUCCH in an uplink slot. Accordingly, latency of HARQ-ACK transmission increases.

Therefore, the terminal 20 switches a cell used for communication from the cell 1 serving as a slot of downlink to the cell 2 serving as a slot of uplink at the timing of HARQ-ACK transmission, and transmits HARQ-ACK. This function is referred to as PUCCH carrier switching.

That is, the PUCCH carrier switching may be switching of a cell (carrier) used for PUCCH transmission by the terminal 20. More specifically, when performing PUCCH transmission at a specific transmission timing of a primary cell (which may be a Pcell, a PScell, a PUCCH-Scell or the like), the PUCCH carrier switching may be switching a cell to perform PUCCH transmission from the primary cell to one or a plurality of secondary cells (Scell or the like, Scell other than PScell when the cell before switching is PScell, Scell other than PUCCH-Scell when the cell before switching is PUCCH-Scell) in which a slot at the same timing as the specific transmission timing is an UL slot, because the slot at the specific transmission timing of the primary cell is a DL slot.

In the present embodiment, the unit of a specific transmission timing is not limited to a slot. For example, the specific transmission timing may be a timing in units of subframes or a timing in units of symbols.

In NR Release 17, two methods for realizing PUCCH carrier switching have been agreed. A first method is a method in which the base station 10 dynamically indicates a cell (carrier) used for transmission of a PUCCH to the terminal 20. A second method is a method in which the base station 10 semi-statically configures a cell (carrier) used for transmission of a PUCCH in the terminal 20. PUCCH carrier switching may be referred to as PUCCH cell switching.

It is agreed that dynamic indication and/or semi-static configuration is subject to individual terminal capabilities. In addition, the configuration operation of the semi-static PUCCH carrier switching is based on a timing pattern of a PUCCH cell configured by RRC of the corresponding PUCCH cell, and it is agreed that PUCCH carrier switching between cells of different numerologies is supported.

Further, necessity of additional provisions for supporting PUCCH carrier switching between cells of different numerologies, the maximum number of PUCCH cells, whether or not to support the combined operation of dynamic and semi-static carrier switching of the terminal 20, a method for supporting the combined operation, whether or not to support the combined operation of PUCCH carrier switching and HARQ-ACK deferral of SPS (Semi-Persistent Scheduling), and a method for supporting the combined operation are still to be studied.

In addition, in the case of PUCCH carrier switching, it is agreed that PUCCH resource configuration is performed for each BWP for uplink, that is, for each candidate cell and for each BWP for uplink of that particular candidate cell.

Also, it has been agreed that, for PUCCH carrier switching based on dynamic indication of DCI that schedules a PUCCH, the offset k1 from PDSCH to HARQ-ACK is interpreted based on the numerology of a target PUCCH cell that is dynamically indicated.

### (About terminal features)

In the related art, in NR, feature groups (FGs) 22-6, 22-6a, 22-7, 22-7a, 22-7b, and 22-7c are defined as terminal features. These features are used to indicate supported PUCCH grouping and supported carrier types that can be configured in PUCCH transmission.

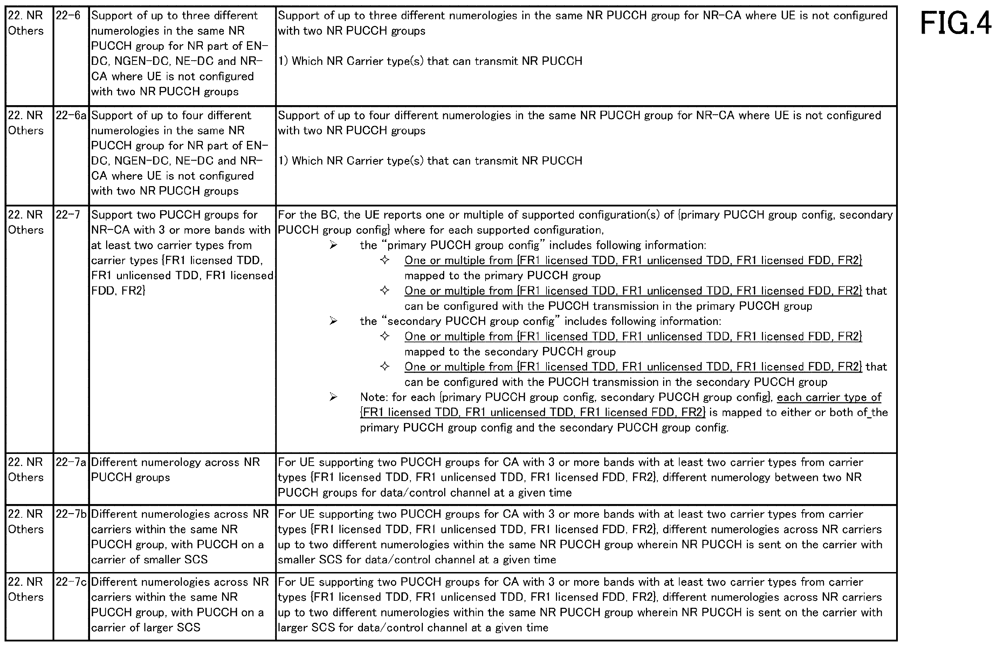

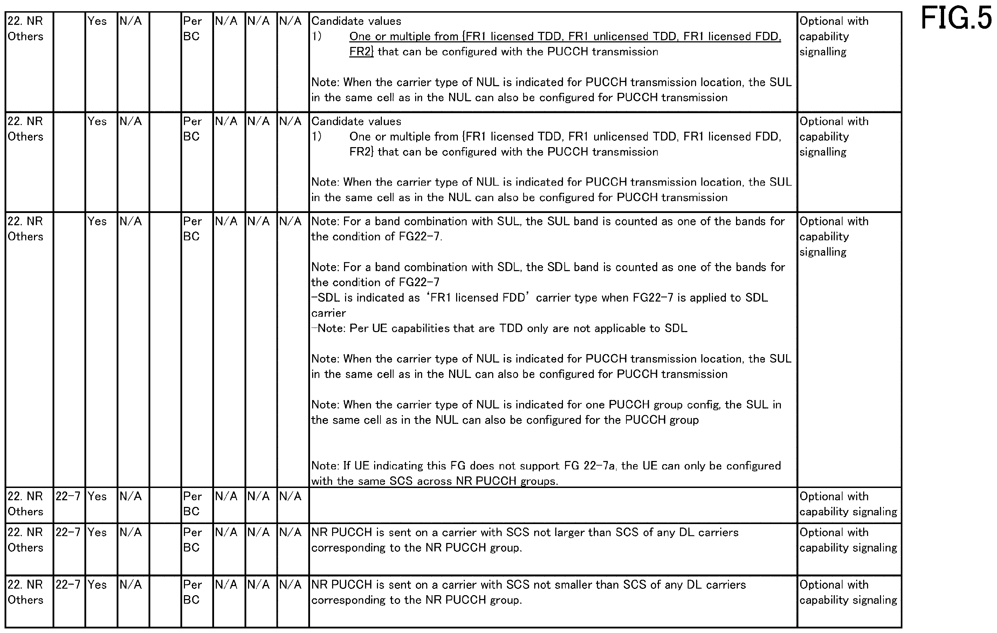

FIG. 4 is a first diagram showing an example of conventional terminal features. FIG. 5 is a second diagram showing an example of the conventional terminal features.

FG22-6 is a feature group indicating terminal features when only one PUCCH group is configured with up to three different numerologies.

FG22-6a is a feature group indicating terminal features when only one PUCCH group is configured with a maximum of four different numerologies.

FG22-7 is a feature group indicating terminal features when two PUCCH groups are configured in three or more bands having at least two types of carriers among the types of carriers {FR1 licensed TDD, FR1 unlicensed TDD, FR1 licensed FDD, FR2}.

X is the same numerology between NR PUCCH groups. Y is a different numerology between NR PUCCH groups if 22-7a is supported. Z is the same numerology across NR carriers in the same PUCCH group. W is a maximum of two different numerologies across the NR carriers in the same PUCCH group if 22-7b and/or 22-7c is reported to the base station 10.

The 22-7a is a feature group indicating terminal features in a case of supporting the instruction of Y of 22-7.

The 22-7b is a feature group indicating terminal features in a case where indication of W of 22-7 by the PUCCH in the carriers of the small SCS is supported.

The 22-7c is a feature group indicating terminal features in a case where indication of W of 22-7 by the PUCCH in carriers of a larger SCS is supported.

That is, in the conventional terminal features, which carrier types can be included in the same PUCCH group and which carrier types can be used for PUCCH transmission of the PUCCH group are reported by these terminal groups.

The carrier type may include other types than the above-described types. For example, FR2 unlicensed TDD, FR2-2 unlicensed TDD, FR2-2 licensed TDD, NTN (Non Terrestrial Network) FR1 FDD, NTN FR2 FDD and the like may be included in the types of carriers.

### (Problems in the Prior art)

If one or more of feature groups (FGs) 22-6, 22-6a, 22-7, 22-7a, 22-7b and 22-7c are reported to the base station 10 as "Supported" with information of types of carriers that can be used for PUCCH transmission, this information is associated with the feature group (FG) 22-9/22-10 indicating the PUCCH carrier-switching functionality.

However, there is a problem in the related art that there is no rule for a PUCCH transmission carrier in consideration of a carrier type reported in these feature groups. For example, when a supported PUCCH group is reported as {FR1 licensed TDD, FR1 licensed FDD, FR2} and a PUCCH transmission carrier supported in the PUCCH group is reported as {FR1 licensed TDD}, it is unclear which type of carrier can be configured in PUCCH carrier switching.

### (Outline of Present Embodiment)

Hereinafter, in order to solve the above-described problem, an example in which the terminal reports a carrier type that can be configured in PUCCH carrier switching as terminal capability information will be described.

When the terminal 20 reports terminal capability information including one or more of feature groups (FGs) 22-6, 22-6a, 22-7, 22-7a, 22-7b, and 22-7c to the base station 10, the base station 10 may assume that the terminal 20 can configure, in PUCCH carrier switching, a carrier/cell of a reported carrier type as a support of PUCCH transmission in a PUCCH group.

In other words, the base station 10 may assume that a carrier/cell of a carrier type that is not reported as a support of PUCCH transmission in a PUCCH group is not configured for PUCCH carrier switching in the terminal 20 (e.g., not configured for pucch-sSCell and/or pucch-sSCell-SecondaryPUCCHgroup).

For example, when the terminal 20 reports that a supported PUCCH group is {FR1 licensed TDD, FR1 licensed FDD, FR2} and a PUCCH transmission carrier of the supported PUCCH group is {FR1 licensed TDD}, the base station 10 may configure PUCCH carrier switching only for a carrier/cell of FR1 licensed TDD.

Furthermore, for example, when a PUCCH group supported by the terminal 20 is reported as {FR1 licensed TDD, FR1 licensed FDD, FR2} and PUCCH transmission carriers of the supported PUCCH group are reported as {FR1 licensed TDD, FR2}, the base station 10 can configure PUCCH carrier switching only for a carrier/cell of FR1 licensed TDD and a carrier/cell of FR2.

Accordingly, the terminal 20 does not need to support PUCCH carrier switching other than a PUCCH grouping related feature group (FG).

The numerology related restrictions reported over one or more of the feature groups (FGs) 22-6, 22-6a, 22-7, 22-7a, 22-7b and 22-7c may be applied jointly.

For example, when the terminal 20 reports {FR1 licensed TDD, FR1 licensed FDD, FR2} as a PUCCH group supported by the terminal 20 as having at most two different numerologies for all the NR carriers included in the PUCCH group, and {FR1 licensed TDD, FR2} as PUCCH transmission carriers of the supported PUCCH group with PUCCHs of small and large SCS carriers, the base station 10 can configure PUCCH carrier switching only for an FR2 carrier/cell of the same/different numerology as the FR1 licensed TDD carrier/cell.

For example, when the terminal 20 reports {FR1 licensed TDD, FR1 licensed FDD, FR2} as a PUCCH group supported by the terminal 20 as having up to two different numerologies for all NR carriers included in the PUCCH group, and {FR1 licensed TDD, FR2} as PUCCH transmission carriers of the supported PUCCH group with a PUCCH of a small SCS carrier (i.e., a PUCCH with large SCS carrier is not supported), the base station 10 can configure PUCCH carrier switching only for a carrier/cell of FR1 licensed TDD and a carrier/cell of FR2 with small SCS.

For example, if the terminal 20 reports {FR1 licensed TDD, FR1 licensed FDD, FR2} as a PUCCH group supported by the terminal 20 as having up to two different numerologies for all NR carriers included in the PUCCH group, and {FR1 licensed TDD, FR2} as PUCCH transmission carriers of the supported PUCCH group with a PUCCH of a large SCS carrier (i.e., i.e., a PUCCH with small SCS carrier is not supported), the base station 10 can configure PUCCH carrier switching only for a carrier/cell of FR1 licensed TDD and a carrier/cell of FR2 with large SCS.

For example, when the terminal 20 reports {FR1 licensed TDD, FR1 licensed FDD, FR2} as a PUCCH group supported by the terminal 20 as having up to three different numerologies for all the NR carriers included in the PUCCH group, and {FR1 licensed TDD, FR2} as PUCCH transmission carriers of the supported PUCCH group, the base station 10 can configure PUCCH carrier switching only for a carrier/cell of FR1 licensed TDD and a carrier/cell of FR2 of any numerology. Note that "up to three" may be replaced with "up to four".

According to the present embodiment, the terminal reports a carrier type that can be configured by PUCCH carrier switching as terminal capability information. This allows PUCCH carrier switching to be configured to an appropriate carrier type.

### (Apparatus Configuration)

Next, functional configuration examples of the base station 10 and the terminal 20 that execute the processes and operations described above will be described. The base station 10 and the terminal 20 include functions for performing the above-described embodiments. However, each of the base station 10 and the terminal 20 may include only the function of any one of the proposals of the embodiments.

### <Base station 10>

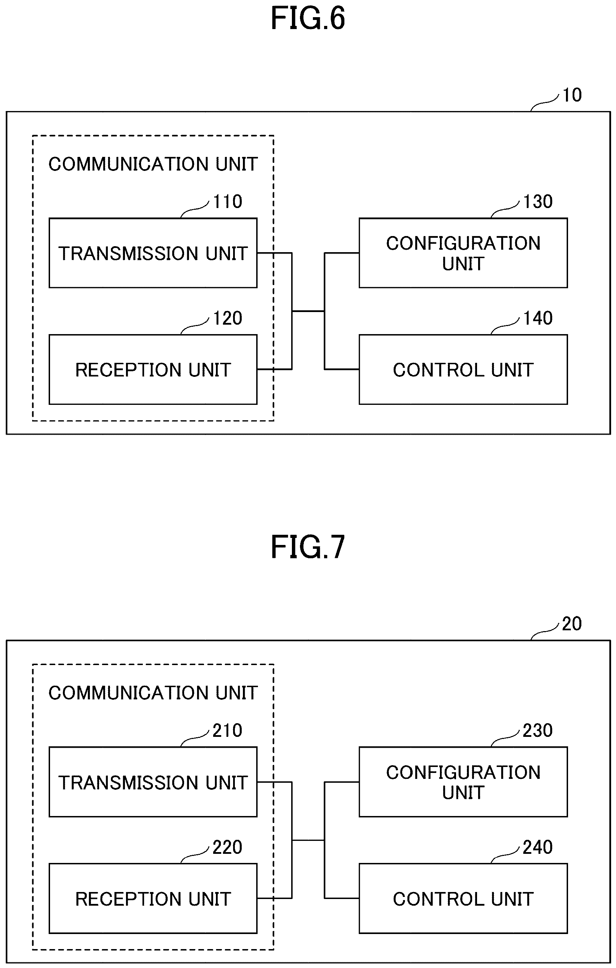

FIG. 6 is a diagram illustrating an example of a functional configuration of the base station 10. As illustrated in FIG. 6, the base station 10 includes a transmission unit 110, a reception unit 120, a configuration unit 130, and a control unit 140. The functional configuration shown in FIG. 6 is merely an example. The functional sections and the names of the functional units may be any as long as the operations according to the embodiment of the present invention can be executed. The transmission unit 110 and the reception unit 120 may be referred to as a communication unit.

The transmission unit 110 includes a function of generating a signal to be transmitted to the terminal 20 side and transmitting the signal by radio. The reception unit 120 includes a function of receiving various signals transmitted from the terminal 20 and acquiring, for example, information of a higher layer from the received signal. The transmission unit 110 has a function of transmitting NR-PSS, NR-SSS, NR-PBCH, DL/UL control signal, DL data, and the like to the terminal 20. The transmission unit 110 transmits the configuration information and the like described in the embodiment.

The configuration unit 130 stores configuration information set in advance and various kinds of configuration information to be transmitted to the terminal 20 in a storage device, and reads the configuration information from the storage device as necessary. The control unit 140 performs, for example, control of the entire base station 10 including control related to signal transmission and reception. Note that the functional units related to signal transmission in the control unit 140 may be included in the transmission unit 110, and the functional units related to signal reception in the control unit 140 may be included in the reception unit 120. The transmission unit 110 and the reception unit 120 may be referred to as a transmitter and a receiver, respectively.

### <Terminal 20>

FIG. 7 is a diagram illustrating an example of a functional configuration of the terminal 20. As illustrated in FIG. 7, the terminal 20 includes a transmission unit 210, a reception unit 220, a configuration unit 230, and a control unit 240. The functional configuration shown in FIG. 7 is merely an example. The functional sections and the names of the functional units may be any as long as the operations according to the embodiment of the present invention can be executed. The transmission unit 210 and the reception unit 220 may be referred to as a communication unit.

The transmission unit 210 creates a transmission signal from the transmission data and transmits the transmission signal by radio. The reception unit 220 receives various signals by radio and acquires a signal of a higher layer from the received signals of the physical layer. The transmission unit 210 transmits HARQ-ACK, and the reception unit 220 receives the configuration information and the like described in the embodiment.

The configuration unit 230 stores various types of configuration information received from the base station 10 by the reception unit 220 in a storage device, and reads the configuration information from the storage device as necessary. The configuration unit 230 also stores configuration information set in advance. The control unit 240 performs control of the entire terminal 20 including control related to signal transmission and reception. Note that the functional units related to signal transmission in the control unit 240 may be included in the transmission unit 210, and the functional units related to signal reception in the control unit 240 may be included in the reception unit 220. The transmission unit 210 and the reception unit 220 may be referred to as a transmitter and a receiver, respectively.

The terminal or the base station according to the present embodiment may be configured as a terminal or a base station described in each of the following items. Also, the following communication method may be implemented.

### <Configuration of Present Embodiment>

### [Item 1]

A terminal including:
a transmission unit configured to transmit terminal capability information, in uplink, that includes a carrier type supporting transmission in a group of uplink control signals; and
a control unit configured to assume that carrier switching of the uplink control signals is configured for the carrier type included in the terminal capability information.

### [Item 2]

The terminal as described in item 1,
wherein, when the terminal capability information includes a restriction on a numerology, the control unit assumes that the carrier switching of the uplink control signals is configured for the carrier type in accordance with the restriction.

### [Item 3]

A base station including:
a reception unit configured to receive, from a terminal, terminal capability information that includes a carrier type supporting transmission in a group of uplink control signals; and
a control unit configured to configure carrier switching of the uplink control signals for the carrier type included in the terminal capability information.

### [Item 4]

A communication method executed by a terminal, the communication method including:
transmitting terminal capability information, in uplink, that includes a carrier type supporting transmission in a group of uplink control signals; and
assuming that carrier switching of the uplink control signals is configured for the carrier type included in the terminal capability information.

Any of the above-described configurations provides a technique that enables PUCCH carrier switching to be configured for an appropriate carrier type. According to item 2, the restriction on the numerology can be reflected in the carrier type of the PUCCH carrier switching.

### (Hardware Configuration)

The block diagrams (FIGS. 14 and 15) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

For example, the base station 10, the terminal 20 and the like in one embodiment of this disclosure may function as a computer for performing the processing of a radio communication method of this disclosure. FIG. 14 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the base station 10 shown in FIG. 6 may be attained by a control program that is stored in the storage device 1002 and is operated by the processor 1001. Also, for example, the control unit 240 of the terminal 20 shown in FIG. 7 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

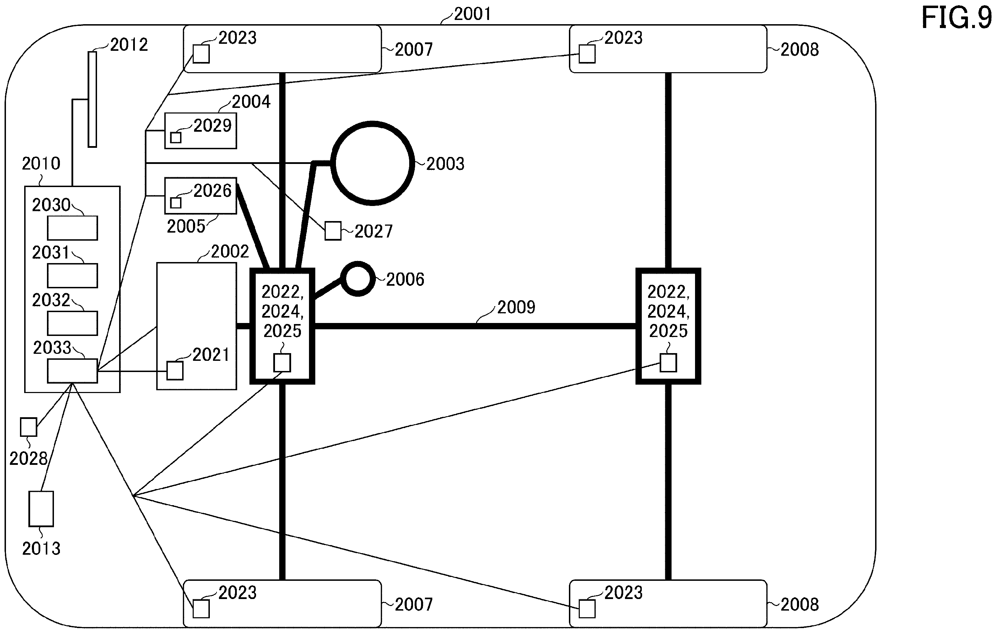

FIG. 9 shows a configuration example of a vehicle 2001 according to the present embodiment. As shown in FIG. 9, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. Each aspect/embodiment described in the present disclosure may be applied to a communication apparatus mounted on the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), 6th generation mobile communication system (6G), xth generation mobile communication system (xG (x is an integer or a decimal, for example), future radio access (FRA), new radio (NR), New radio access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, created, or defined on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" and "determining" may include deeming receiving (for example, receiving information), transmitting (for example, transmitting information), input, output, and accessing (for example, accessing data in a memory), as "determining". In addition, "determining" and "determining" may include deeming resolving, selecting, choosing, establishing, comparing, and the like as "determining" and "determining". That is, "determining" and "determining" may include deeming an operation as "determining" and "determining". In addition, "determining " may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some nonlimiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a subcarrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In the terminal 20, one or a plurality of BWPs may be configured within one carrier.

At least one of the configured BWPs may be active, and it need not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

This patent application claims priority based on Japanese Patent Application No. 2022-030487 filed on February 28, 2022, and the entire contents of the Japanese Patent Application No. 2022-030487 are incorporated herein by reference.

### Description of Symbols

10 base station
110 transmission unit
120 reception unit
130 configuration unit
140 control unit
20 terminal
210 transmission unit
220 reception unit
230 configuration unit
240 control unit
30 core network
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheels
2008 rear wheels
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. A terminal comprising:
a transmission unit configured to transmit terminal capability information, in uplink, that includes a carrier type supporting transmission in a group of uplink control signals; and
a control unit configured to assume that carrier switching of the uplink control signals is configured for the carrier type included in the terminal capability information.

2. The terminal as claimed in claim 1,
wherein, when the terminal capability information includes a restriction on a numerology, the control unit assumes that the carrier switching of the uplink control signals is configured for the carrier type in accordance with the restriction.

3. A base station comprising:
a reception unit configured to receive, from a terminal, terminal capability information that includes a carrier type supporting transmission in a group of uplink control signals; and
a control unit configured to configure carrier switching of the uplink control signals for the carrier type included in the terminal capability information.

4. A communication method executed by a terminal, the communication method comprising:
transmitting terminal capability information, in uplink, that includes a carrier type supporting transmission in a group of uplink control signals; and
assuming that carrier switching of the uplink control signals is configured for the carrier type included in the terminal capability information.
